# DEMANDE DE BREVET EUROPEEN

(11) **EP 0 532 811 A1**
(43) Date de publication de la demande: **24.03.1993**
(21) Numéro de dépôt: 91402509.3
(22) Date de dépôt: 20.09.1991
(51) Int. Cl.: G05G 1/28, H01H 21/34, F16K 37/00

(54) **Système de signalisation de l'état de la position d'un organe rotatif**

(71) Demandeur: CONSTRUCTIONS INDUSTRIELLES DE LA MEDITERRANEE C.N.I.M., F-75008 Paris (FR)
(72) Inventeur: Gerbaud, Yves, F-83500 La Seyne Sur Mer (FR)
(74) Mandataire: Armengaud Ainé, Alain

(57) **Abrégé**

Dispositif de signalisation, destiné à surveiller l'état de la position, notamment de fin de course, d'un organe rotatif et à indiquer la perte de cet état surveillé après une rotation prédéterminée de très faible amplitude de cet organe rotatif sur lequel il est monté, ce dispositif étant caractérisé en ce qu'il est constitué d'un corps (10) muni d'un arbre de manoeuvre (12) mobile en rotation et relié rigidement à l'axe dudit organe rotatif, ledit arbre de manoeuvre étant muni d'une came (18) sur laquelle vient prendre appui un doigt (20) prévu à l'extrémité d'un organe amplificateur (22) de la rotation de l'arbre de manoeuvre, ledit organe amplificateur, à la fin de la rotation prédéterminée dudit arbre (12), actionnant sous l'effet de ladite came le déclenchement d'au moins un micro-contact (32, 34) indiquant la fin de l'état surveillé.

## Description

La présente invention a pour objet un dispositif de signalisation à commande rotative destiné à surveiller l'état de la position d'un organe rotatif et à indiquer la perte de cet état après une rotation de faible amplitude prédéterminée de cet organe rotatif. Un tel dispositif peut notamment être appliqué à la surveillance de l'état de sectionnements à boisseau sphérique (c'est-à-dire de robinets ou vannes à boisseau sphérique) sur lesquels il est monté, le dispositif servant alors de système de fin de course.

Dans de telles applications, le problème à résoudre réside dans la détection de la perte de l'état surveillé qui doit intervenir après une rotation de l'axe de manoeuvre du sectionnement de l'ordre de 1°. On conçoit qu'une telle précision est particulièrement difficile à obtenir et, jusqu'à présent il n'existe aucun dispositif donnant réellement satisfaction. La présente invention se propose de combler cette lacune.

En conséquence la présente invention a pour objet un dispositif de signalisation, destiné à surveiller l'état de la position, notamment de fin de course, d'un organe rotatif et à indiquer la perte de cet état surveillé après une rotation prédéterminée de très faible amplitude de cet organe rotatif sur lequel il est monté, ce dispositif étant caractérisé en ce qu'il est constitué d'un corps muni d'un arbre de manoeuvre mobile en rotation et relié rigidement à l'axe dudit organe rotatif, ledit arbre de manoeuvre étant muni d'une came sur laquelle vient prendre appui un doigt prévu a l'extrémité d'un organe amplificateur de la rotation de l'arbre de manoeuvre, ledit organe amplificateur, à la fin de la rotation prédéterminée dudit arbre, actionnant sous l'effet de ladite came le déclenchement d'au moins un micro-contact indiquant la fin de l'état surveillé.

Selon un exemple de réalisation préféré du dispositif objet de l'invention, ledit organe amplificateur est réalisé sous la forme d'un levier basculeur, rappelé par un ressort, dont l'une des extrémités est munie dudit doigt prenant appui sur la came et dont l'extrémité opposée actionne le micro-contact lors du basculement dudit levier autour de son axe en fin de rotation de l'arbre de commande. De préférence, ce levier basculeur présente la forme d'un étrier dont l'extrémité articulée sur l'axe de basculement est munie dudit doigt et dont l'autre extrémité est pourvue de deux surfaces en saillie, disposées symétriquement par rapport à l'axe dudit étrier, chacune de ces deux surfaces en saillie étant conformée de façon à venir appuyer sur un micro-contact.

Selon un mode de réalisation de ce dispositif la liaison rigide entre l'arbre de commande et l'axe dudit organe rotatif peut être du type à dentelures, l'axe dudit organe rotatif comportant des dents sur sa périphérie en prise avec des dents correspondantes prévues sur la surface de l'alésage axial ménagé dans l'axe de manoeuvre.

Selon un mode de mise en oeuvre préféré du dispositif objet de l'invention appliqué à la surveillance de l'état de sectionnements à boisseau, ce dispositif est conçu de façon qu'en position ouverte le levier basculeur est en position de travail, contraint par la came, le micro-contact hors contrainte mécanique donnant alors l'information "sectionnement ouvert" et le basculement du levier lors de la rotation de l'axe de commande actionnant le micro-contact qui perd l'information nominale et acquiert l'information complémentaire.

D'autres caractéristiques et avantages de la présente invention ressortiront de la description faite ci-après en référence aux dessins annexés qui en illustrent un exemple de réalisation et d'application dépourvu de tout caractère limitatif. Sur les dessins :
- la figure 1 est une vue en plan, en coupe selon 1-1 de la figure 3 du dispositif conforme à l'invention ;
- la figure 2 est une coupe selon 2-2 de la figure 1 ;
- la figure 3 est une coupe selon 3-3 de la figure 1 ;
- la figure 4 est une vue en élévation latérale du levier basculeur du dispositif selon l'invention et ;
- la figure 5 est une vue en coupe selon 5-5 de la figure 4.

Ainsi qu'on l'a mentionné dans le préambule de la présente description, le dispositif objet de la présente invention est conçu de manière à surveiller l'état de la position d'un organe rotatif, notamment de fin de course. De tels dispositifs peuvent être notamment utilisés pour surveiller l'état de sectionnements à boisseau sphérique sur lesquels ils sont montés. Bien entendu, cette application est mentionnée uniquement à titre d'exemple dépourvu de tout caractère limitatif.

En se référant aux dessins, on voit que le dispositif selon l'invention est constitué d'un corps désigné dans son ensemble par la référence 10 qui est muni d'un arbre de manoeuvre 12. Cet arbre de manoeuvre est mobile en rotation et il est rigidement relié à l'axe de l'organe rotatif dont on veut surveiller l'état de la position. Dans l'exemple de réalisation représenté sur le dessin la liaison rigide entre l'arbre de manoeuvre 12 et l'arbre de l'organe rotatif (non représenté sur le dessin, cet arbre pouvant être l'arbre de commande du sectionnement à boisseau) est du type à dentelures. A cet effet, l'arbre de manoeuvre comporte un alésage axial 14 dont la surface est pourvue d'un certain nombre de dents 16 qui sont en prise avec des dents correspondantes prévues sur la surface externe de l'arbre de l'organe rotatif.

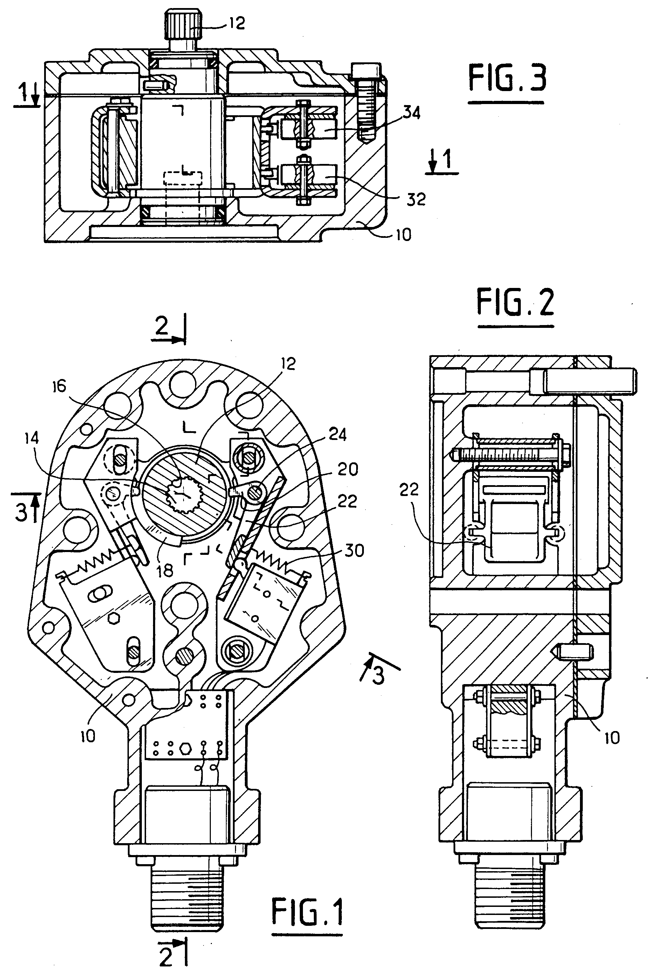

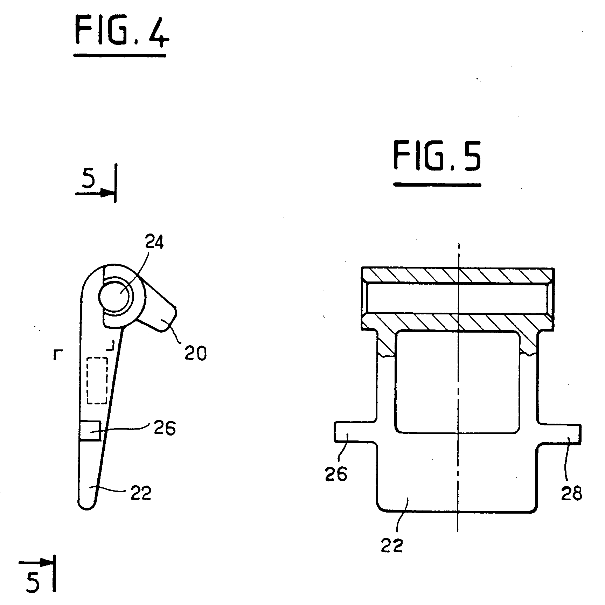

L'arbre de manoeuvre 12 est pourvu d'une came 18 sur laquelle vient prendre appui un doigt 20 qui est prévu à l'extrémité d'un levier 22 articulé sur un axe 24 monté sur un support solidaire du corps 10. Ce levier basculeur 22, qui est rappelé par un ressort 30 est conçu de manière à assurer l'amplification du mouvement de rotation de l'arbre de manoeuvre 12. Dans cet exemple de réalisation non limitatif le levier 22 (voir les figures 4 et 5) est réalisé sous la forme d'un étrier dont l'extrémité articulée sur l'axe 24 est munie du doigt 22 et dont l'autre extrémité comporte des surfaces en saillie 26, 28 qui ainsi qu'on le décrira ci-après sont conçues de façon à actionner des micro-contacts.

L'axe de manoeuvre 12 entraîne, en fin de rotation, par l'intermédiaire de la came 18, le levier basculeur tel que 22 qui vient alors actionner un ou plusieurs micro-contacts tels que 32, 34. Dans cet exemple de réalisation on a prévu deux micro-contacts tels que 32, 34 par état à surveilleur ceci pour raison de redondance de fiabilité. Bien entendu, on peut prévoir un nombre de contacts qui est fonction du nombre d'états à surveiller par exemple "ouvert", "fermé" ou "ouvert-fermé" dans le cas d'une application du dispositif objet de l'invention à la surveillance de l'état de sectionnements à boisseau sphérique.

Le fonctionnement est donc le suivant. En position "ouvert", par exemple, le levier basculeur 22 est en position travail, c'est-à-dire qu'il est contraint par la came 18 et les micro-contacts 32, 34 sont alors hors contrainte mécanique et ils donnent l'information "sectionnement ouvert". Après une rotation de quelques degrés de l'arbre de manoeuvre 12 et par conséquent de la came 18 solidaire de cet arbre, la came libère le levier basculeur 22 qui, rappelé par son ressort 30, contraint les micro-contacts 32, 34 qui basculent perdant ainsi l'information nominale pour acquérir l'information complémentaire.

Ainsi, dans cet exemple de mise en oeuvre un micro-contact destiné à signaler un état est toujours hors contrainte mécanique lorsqu'il indique cet état, toute anomalie sur la chaîne cinématique du dispositif objet de l'invention conduisant à perdre l'information nominale. On peut bien entendu choisir le mode de mise en oeuvre inverse c'est-à-dire celui selon lequel un micro-contact destiné à signaler un état est toujours en contrainte mécanique c'est-à-dire sollicité par le levier basculeur 22.

Les dimensions de la came 18 sont choisies en fonction de la course angulaire devant être réalisée avant l'obtention des états recherchés.

Le dispositif décrit ci-dessus comporte en outre des diodes qui sont destinées à assurer la surveillance de lignes en alimentation par courant alternatif.

Ainsi qu'on l'a précisé ci-dessus, le dispositif de signalisation à commande rotative objet de la présente invention permet d'indiquer toute perte de l'état surveillé après une rotation de l'axe de manoeuvre de l'ordre de 1°. Cette précision est obtenue essentiellement grâce à la conception du levier basculeur 22 qui amplifie la rotation de l'arbre de commande 12, transmise aux micro-contacts.

Il demeure bien entendu que la présente invention n'est pas limitée aux exemples de réalisation ou d'application décrits et mentionnés ci-dessus mais qu'elle en englobe toutes les variantes.

## Revendications

1. Dispositif de signalisation, destiné à surveiller l'état de la position, notamment de fin de course, d'un organe rotatif et à indiquer la perte de cet état surveillé après une rotation prédéterminée de très faible amplitude de cet organe rotatif sur lequel il est monté, ce dispositif étant caractérisé en ce qu'il est constitué d'un corps (10) muni d'un arbre de manoeuvre (12) mobile en rotation et relié rigidement à l'axe dudit organe rotatif, ledit arbre de manoeuvre étant muni d'une came (18) sur laquelle vient prendre appui un doigt (20) prévu a l'extrémité d'un organe amplificateur (22) de la rotation de l'arbre de manoeuvre, ledit organe amplificateur, à la fin de la rotation prédéterminée dudit arbre (12), actionnant sous l'effet de ladite came le déclenchement d'au moins un micro-contact (32, 34) indiquant la fin de l'état surveillé.

2. Dispositif de signalisation selon la revendication 1, caractérisé en ce que ledit organe amplificateur (22) est réalisé sous la forme d'un levier basculeur, rappelé par un ressort (30), dont l'une des extrémités est munie dudit doigt (20) prenant appui sur la came (18) et dont l'extrémité opposée actionne le micro-contact (32, 34) lors du basculement dudit levier autour de son axe (24) en fin de rotation de l'arbre de commande (12).

3. Dispositif de signalisation selon la revendication 2, caractérisé en ce que ce levier basculeur (22) présente la forme d'un étrier dont l'extrémité articulée sur l'axe de basculement (24) est munie dudit doigt (20w) et dont l'autre extrémité est pourvue de deux surfaces en saillie (26, 28) , disposées symétriquement par rapport à l'axe dudit étrier, chacune de ces deux surfaces en saillie étant conformée de façon à venir appuyer sur un micro-contact (32, 34).

4. Dispositif de signalisation selon l'une quelconque des revendications précédentes, caractérisé en ce que la liaison rigide entre l'arbre de commande (12) et l'axe dudit organe rotatif est du type à dentelures, l'axe dudit organe rotatif comportant des dents sur sa périphérie en prise avec des dents correspondantes (16) prévues sur la surface de l'alésage axial ménagé dans l'axe de manoeuvre (12).

5. Dispositif de signalisation selon l'une quelconque des revendications précédentes, caractérisé en ce que le nombre de micro-contacts est fonction du nombre d'états à surveiller.

6. Dispositif de signalisation selon l'une quelconque des revendications précédentes, caractérisé en ce que les dimensions de la came (18) varient en fonction de la course angulaire à réaliser avant l'obtention des états recherchés.

7. Dispositif de signalisation selon l'une quelconque des revendications précédentes, caractérisé en ce qu'il est appliqué à la surveillance de l'état de sectionnements à boisseau, l'axe de manoeuvre (12) étant lié à l'arbre de commande du sectionnement.

8. Dispositif de signalisation selon la revendication 7, caractérisé en ce qu'il est conçu de manière qu'en position ouverte ledit basculeur amplificateur (22) est en position travail, contraint par ladite came (18), les micro-contacts hors contrainte mécanique donnant alors l'information "sectionnement ouvert" et le basculement dudit basculeur amplificateur (22) lors de la rotation de l'axe de commande (12) actionnant le micro-contact qui perd l'information nominale et acquiert l'information complémentaire.
